# EUROPEAN PATENT APPLICATION

(11) **EP 1 167 083 A2**
(43) Date of publication of application: **02.01.2002**
(21) Application number: 01113818.7
(22) Date of filing: 06.06.2001
(51) Int. Cl.: B60C 11/01

(54) **Heavy transport radial tire**

(30) Priority: 09.06.2000 IT TO000560
(71) Applicant: BRIDGESTONE CORPORATION, Tokyo 104-0031 (JP)
(72) Inventor: Neises, Stefano, I-00042 Anzio (IT)
(74) Representative: Cerbaro, Elena, Dr.

(57) **Abstract**

A heavy-transport radial tire (1), the tread (2) of which has a number of circumferential main grooves (4) and, at each shoulder (3), a circumferential decoupling groove (5) defining a peripheral rib (6), which contacts the ground along a respective annular contact portion (9) and, in section, is of tapered shape defined by a taper (8) formed along an outer surface of the peripheral rib (6) and imparting a substantially truncated-cone shape to the respective shoulder (3).

## Description

The present invention relates to a heavy-transport radial tire.

More specifically, the present invention relates to a heavy-transport TBR (Truck and Bus Radial) tire comprising a tread having a number of circumferential main grooves of a first given depth, and, at each shoulder, a circumferential decoupling groove defining, outwards of the tread, a peripheral so-called sacrifice rib, which makes ground contact along a peripheral contact portion, and tapers in section towards the contact portion.

In known tires of the above type, each sacrifice rib is thinner and, hence, of a lower rigidity than the other tread ribs, and serves to ensure wear of the respective shoulder is concentrated at the sacrifice rib itself, as opposed to spreading towards the equatorial plane of the tread.

Unfortunately, given its relatively poor rigidity, each sacrifice rib is subjected to relatively severe in-service strain, which results, at the base of the sacrifice rib, in fatigue shearing stress proportional to the depth of the relative decoupling groove. To prevent such stress from forming, at the base of the sacrifice ribs, microfractures possibly resulting in detachment of the sacrifice ribs, the decoupling grooves are normally much shallower than the other grooves, and are also narrower to maintain acceptable stress values at the base of the respective sacrifice ribs, while at the same time enabling the sacrifice ribs to rest against the respective adjacent ribs in the presence of transverse forces over an above a given value.

On account of the shallow depth of the decoupling grooves, however, the sacrifice ribs are obviously only effective over part of the working life of the tire, by being consumed before the tire itself wears out completely.

One solution to the problem is proposed in prior Patents EP-0256247 and EP-0285695, which relate to tires having shoulders defined externally by curved surfaces, and sacrifice ribs which taper radially outwards of the tire and are defined, towards the equatorial plane of the tire, by respective decoupling grooves of a depth of the same order as that of the other circumferential grooves.

When the tire is new, the sacrifice ribs, being tapered, have ground contact portions of a relatively small area, so that the applied transverse loads are relatively low and result in no microfractures at the base of the sacrifice ribs even with relatively deep decoupling grooves. During use, the sacrifice ribs wear down, thus increasing the contact portions and, consequently, the applied loads, under the same working conditions, but, at the same time, the decoupling grooves get shallower so that the conditions at the base of the sacrifice ribs remain, at least theoretically, unchanged.

Experience has shown, however, that this is not always so, on account of the rounded outer shape of the above known tires. That is to say, over a first part of the working life of the tire, a relatively small reduction in the depth of the decoupling grooves is accompanied by a much more than proportional increase in the contact portion area, and, therefore, by applied transverse forces severe enough, under certain working conditions, to form microfractures at the base of the sacrifice ribs.

It is an object of the present invention to provide a tire of the above type, designed to eliminate the aforementioned drawback, while at the same time minimizing the risk of detachment of the sacrifice ribs.

According to the present invention, there is provided a heavy-transport radial tire; the tire comprising a tread, in turn, comprising two shoulders, a number of circumferential main grooves located between said shoulders and of a first given depth, and, at each shoulder, a circumferential decoupling groove defining, outwards of the tread, a peripheral rib which contacts the ground along a respective peripheral contact portion, said peripheral rib being, in section, of tapered shape narrowing towards said contact portion; characterized in that said tapered shape is defined by a taper formed along an outer surface of said peripheral rib and imparting a substantially truncated-cone shape to the respective said shoulder; said circumferential decoupling groove being of a second depth ranging between 70 and 100% of said first depth.

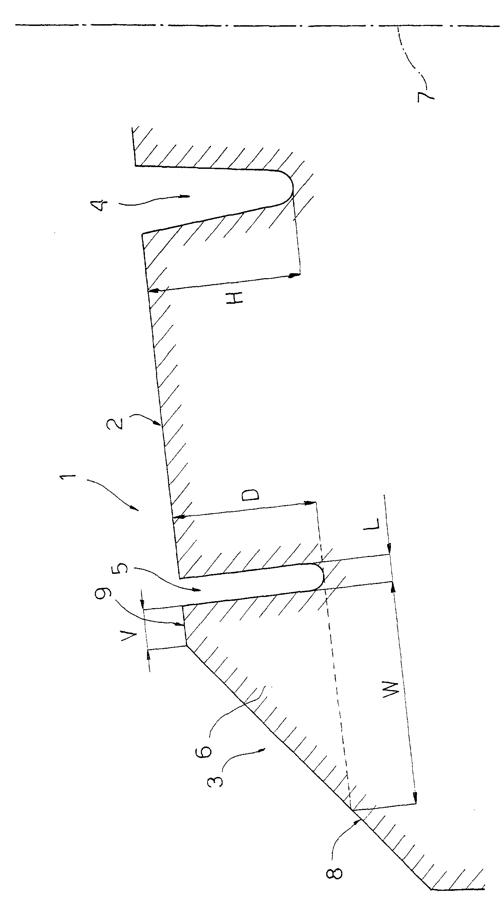

The invention will be described with reference to the accompanying drawing, which shows a partial cross section of a preferred embodiment, and in which number 1 indicates a heavy-transport tire, in particular a TBR tire, comprising a tread 2, in turn, comprising two shoulders 3, a number of main grooves 4 (only one shown) of a given depth H located between shoulders 3 and extending circumferentially about tire 1, and, at each shoulder 3, a circumferential decoupling groove 5 defining, outwards of tread 2, a rib 6 normally referred to as a "sacrifice rib".

In section, each sacrifice rib 6 is in the form of trapezium tapering radially outwards, is defined, towards an equatorial plane 7 of tire 1, by respective decoupling groove 5, is defined axially outwards by a taper 8 formed along an outer surface of sacrifice rib 6 and imparting to respective shoulder 3 a truncated-cone shape coaxial with the axis of tire 1, and is defined radially outwards by an annular ground-contact portion 9 of width V.

An important point to note in connection with the above is that, on account of taper 8, width V varies, with wear, linearly and in inverse proportion to the depth D of decoupling groove 5, thus preventing any anomalous situations arising over the first part of the working life of tire 1.

Experience has shown that, forming each groove 5 of a depth D ranging between 70 and 100% of depth H, and of a width L of less than 5 mm, as deduced from the prior patents mentioned previously, the risk of microfractures forming at the base of the respective sacrifice rib 6 is almost entirely eliminated when the height of respective taper 8, projected onto equatorial plane 7, is greater than depth D of respective decoupling groove 5, and when the thickness of respective sacrifice rib 6 and the inclination of taper 8 are such as to achieve a 0.15 to 0.45 ratio between width V of respective annular portion 9 and a (reference) thickness W of sacrifice rib 6 measured at the bottom of respective decoupling groove 5.

Given the above conditions, the best test results have been obtained with ratios of 0.3 to 0.8 between depth D of the respective decoupling groove 5 and reference thickness W of sacrifice rib 6.

## Claims

1. A heavy-transport radial tire; the tire (1) comprising a tread (2), in turn, comprising two shoulders (3), a number of circumferential main grooves (4) located between said shoulders (3) and of a first given depth (H), and, at each shoulder (3), a circumferential decoupling groove (5) defining, outwards of the tread (2), a peripheral rib (6) which contacts the ground along a respective peripheral contact portion (9), said peripheral rib (6) being, in section, of tapered shape narrowing towards said contact portion (9); **characterized in that** said tapered shape is defined by a taper (8) formed along an outer surface of said peripheral rib (6) and imparting a substantially truncated-cone shape to the respective said shoulder (3); said circumferential decoupling groove (5) being of a second depth (D) ranging between 70 and 100% of said first depth (H).

2. A tire (1) as claimed in Claim 1, wherein said taper (8), when projected onto an equatorial plane (7) of the tire (1), is of a height at least equal to said second depth (D).

3. A tire (1) as claimed in one of the foregoing Claims, wherein said peripheral contact portion (9) is of a given width (V), and said circumferential decoupling groove (5) is of such a reference thickness (W), measured at a radial distance from said peripheral contact portion (9) equal to the depth of the circumferential decoupling groove (5), that the ratio between said width (V) and said reference thickness (W) ranges between 0,15 and 0.45.

4. A tire (1) as claimed in one of the foregoing Claims, wherein said circumferential decoupling groove (5) is of such a reference thickness (W), measured at a radial distance from said peripheral contact portion (9) equal to the depth (D) of the circumferential decoupling groove (5), that the ratio between said second depth (D) and said reference thickness (W) ranges between 0.3 and 0.8.

5. A tire (1) as claimed in one of the foregoing Claims, wherein said circumferential decoupling groove (5) is of a width (L) equal to 5 mm at most.
